# EUROPEAN PATENT APPLICATION

(11) **EP 2 251 827 A1**
(43) Date of publication of application: **17.11.2010**
(21) Application number: 10160943.6
(22) Date of filing: 23.04.2010
(51) Int. Cl.: G06Q 30/00

(54) **Information distribution**

(30) Priority: 07.05.2009 US 387775
(71) Applicant: Sony Corporation, Minato-ku Tokyo 108-0075 (JP); Sony Electronics Inc., Park Ridge, NJ 07656 (US)
(72) Inventor: Loughery III, Donald L., Long Beach, CA 90803 (US); Frazier, Milton, San Marcos, CA 92069 (US); Rainier, Rajiv, San Diego, CA 92127 (US); Jacobs, Stephen, Ardsley, NY 10022 (US); Noronha, Austin, Sunnyvale, CA 94086 (US); Smith, Tim, Carlsbad, CA 92011 (US)
(74) Representative: Scaddan, Gareth Casey

(57) **Abstract**

A system and method for distributing coupon information in an electronic network includes an information service that is configured to provide information distribution services through said information distribution network. User devices are provided for device users to communicate with the information service for receiving the information distribution services. A transport structure communicates with network entities in the information distribution network for collecting appropriate types of metadata. A transport server then performs a metadata analysis procedure upon the various types of metadata to responsively generate the coupon information.

## Description

### Field of the Invention

This invention relates generally to information distribution. Embodiments of this invention relate to techniques for distributing electronic information, and relate more particularly to a system and method for distributing coupon information in an electronic network.

### Background of the Invention

Implementing effective methods for distributing electronic information is a significant consideration for designers and manufacturers of contemporary electronic systems. However, effectively distributing electronic information utilized by electronic devices may create substantial challenges for system designers. For example, enhanced demands for increased system functionality and performance may require more system processing power and require additional software resources. An increase in processing or software requirements may also result in a corresponding detrimental economic impact due to increased production costs and operational inefficiencies.

Furthermore, enhanced system capability to perform various advanced distribution operations may provide additional benefits to a system user, but may also place increased demands on the control and management of various system components. For example, an electronic system that effectively manages electronic coupon and advertising information may benefit from an effective implementation because of the large amount and complexity of the digital data involved.

Due to growing demands on system resources and substantially increasing data magnitudes, it is apparent that developing new techniques for distributing electronic information to electronic devices is a matter of concern for related electronic technologies. Therefore, for all the foregoing reasons, developing effective techniques for distributing electronic information remains a significant consideration for designers, manufacturers, and users of contemporary electronic systems.

### Summary of the Intention

Various respective aspects and features of the invention are defined in the appended claims. Combinations of features from the dependent claims may be combined with features of the independent claims as appropriate and not merely as explicitly set out in the claims.

In accordance with embodiments of the present invention, a system and method for distributing coupon information in an electronic network are disclosed. In one embodiment, a distribution system automatically provides various types of appropriate information for utilization by device users of corresponding user devices. For example, the distributed information may include, but is not limited to, coupon information and commercial advertising information that is targeted towards specific device users. Unlike traditional advertising techniques that support a "pull" model that requires consumers to actively access desired advertising information, the foregoing distribution system supports a "push" model that automatically selects and transmits appropriate advertising information to targeted device users based upon corresponding metadata files that define both the device users and the various advertisers.

In one embodiment, the distribution system may support and utilize one or more transport structures that automatically transport various types of relevant information to and from appropriate entities in the distribution system. For example, the transport structures may be utilized to gather and transfer metadata regarding the various device users, the user devices, the electronic network, and respective advertisers from an information service. In addition, the transport structures may also be utilized to provide links to targeted coupon information, advertisements and/or electronic content to appropriate user devices.

In certain embodiments, one or more transport structures are initially created in any effective manner. For example, the transport structures may be embedded in user devices during manufacture, and then activated by device users. Alternately, an appropriate entity in the distribution system may create or otherwise provide the initial transport structures. Advertiser metadata from one or more advertisers may be added to the transport structures in any effective manner to represent relevant characteristics and advertising goals of the corresponding advertisers.

In addition, appropriate media files may be created to include information for dissemination to targeted device users through the distribution system. The media files may include any desired information, such as advertisements, coupon information, and content items. Next, device users may perform a registration procedure to subscribe for receiving information from the distribution system. During the registration procedure, the device users typically provides various types of relevant information including, but not limited to, user metadata and device metadata. The transport structures are updated to include the user metadata provided by the device users during the foregoing registration procedure.

Next, a transport server or other appropriate entity analyzes the metadata provided by the transport structure(s). The transport server then responsively generates appropriate receptiveness metadata based upon the foregoing metadata analysis procedure. Receptiveness metadata may include any appropriate type of information that describes the degree of receptivity that respective device users are likely to exhibit towards various specific types of advertising or coupon information. In certain embodiments, receptiveness metadata may include information that is expressly provided by a device user to either ban or accept specific types of advertisements or coupon information.

The transport server transmits the receptiveness metadata to appropriate device users by utilizing any effective means. For example, in certain embodiments, one or more transport structures may be utilized to convey receptiveness metadata to respective user devices. In accordance with certain embodiments of the present invention, a given user device may then automatically provide appropriate receptiveness metadata to a local display device, such as an intelligent digital sign device, by utilizing any effective communication techniques. For example, various known or enhanced wireless communication techniques may be utilized to permit the user device to automatically detect and communicate with a nearby digital sign device that is within line-of-sight of the device user of the particular user device.

The local display device may automatically analyze the receptiveness metadata received from the user device, and responsively identify and display appropriate targeted electronic coupon information and advertisements for viewing by the device user. The device user may then advantageously utilize the corresponding user device to access any desired coupon(s) by utilizing any appropriate means. For example, in certain embodiments, the coupon(s) may be downloaded onto the user device or to an electronic transaction card or token.

At some later time, the device user may redeem the coupon(s) in any appropriate manner by using any effective electronic techniques. Finally, various types of feedback metadata regarding the coupon(s) and the redemption transaction may be generated and provided to advertisers or other interested entities in any effective manner. For example, in certain embodiments, a user device of a merchant involved in the redemption transaction may automatically generate feedback metadata. In addition, the user device of the redeeming device user may alternately generate the feedback metadata.

In various embodiments, the feedback metadata may include any desired type of information. For example, the feedback metadata may include, but is not limited to, a coupon type, a coupon source, a coupon origination date, a coupon redemption date, a product or service type, and a merchant identity. In certain embodiments, the feedback metadata may be transported to advertisers or other interested parties by utilizing one or more transport structures or other effective techniques. Based upon the received feedback metadata, advertisers may thus more accurately analyze the effectiveness and efficiency of their corresponding advertisements and marketing strategies.

The foregoing coupon distribution procedure is described in the context of targeted coupons and advertising being provided from a local smart display device or digital sign device. However, in accordance with embodiments of the present invention, appropriate coupon information may be identified and provided to device users from any effective source. For example, in certain embodiments, the coupon information may be readily identified and provided directly to targeted user devices by the transport server via one or more transport structures. For at least the foregoing reasons, embodiments of the present invention therefore provide an improved system and method for distributing coupon information in an electronic network.

### Brief Description of the Drawings

Embodiments of the invention will now be described with reference to the accompanying drawings, throughout which like parts are referred to by like references, and in which:
FIG. 1A is a block diagram of a distribution system, in accordance with one embodiment of the present invention;
FIG. 1B is a block diagram of a trusted network, in accordance with one embodiment of the present invention;
FIG. 2A is a block diagram for one embodiment of a transport structure;
FIG. 2B is a block diagram for one embodiment of a media file;
FIG. 3 is a block diagram for one embodiment of a user device from FIG. 1A;
FIG. 4 is a block diagram for one embodiment of the user memory from FIG. 3;
FIG. 5 is a block diagram for one embodiment of the information service from FIG. 1A;
FIG. 6A is a block diagram for one embodiment of the transport server from FIG. 5;
FIG. 6B is a block diagram for one embodiment of the transport server memory from FIG. 6A;
FIG. 7 is a block diagram for one embodiment of the ad server from FIG. 5; and
FIGS. 8A-8C are a flowchart of method steps for performing a coupon distribution procedure, in accordance with one embodiment of the present invention.

### Description of the Example Embodiments

Embodiments of the present invention relate to an improvement in electronic data distribution techniques. The following description is presented to enable one of ordinary skill in the art to make and use the invention, and is provided in the context of a patent application and its requirements. Various modifications to the disclosed embodiments will be apparent to those skilled in the art, and the generic principles herein may be applied to other embodiments. Therefore, the present invention is not intended to be limited to the embodiments shown, but is to be accorded the widest scope consistent with the principles and features described herein.

Embodiments of the present invention comprise a system and method for distributing coupon information in an electronic network, and include an information service that is configured to provide information distribution services through said information distribution network. User devices are provided for device users to communicate with the information service for receiving the information distribution services. A transport structure communicates with network entities in the information distribution network for collecting appropriate types of metadata. A transport server then performs a metadata analysis procedure upon the various types of metadata to responsively generate the coupon information.

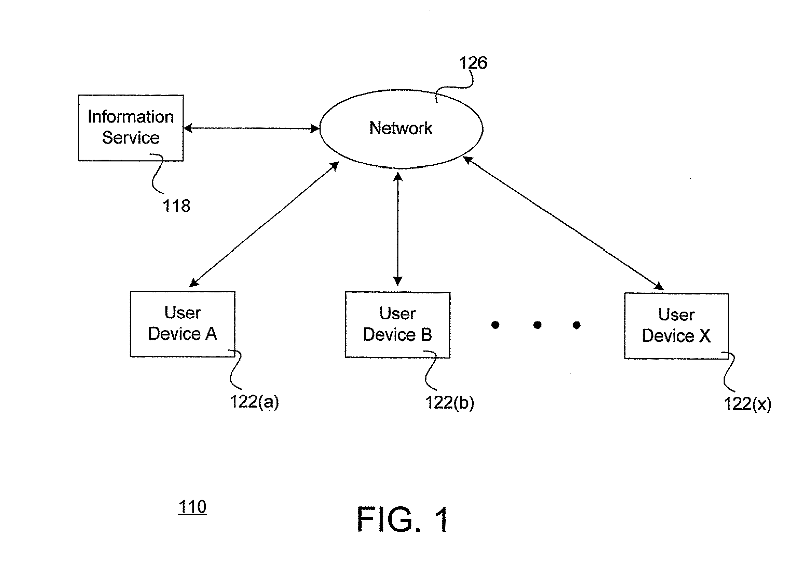

Referring now to FIG. 1A, a block diagram of a distribution system 110 is shown, in accordance with one embodiment of the present invention. In the FIG. 1A embodiment, distribution system 110 may include, but is not limited to, one or more user devices 122, an information service 118, and a network 126. In alternate embodiments, distribution system 110 may be implemented by utilizing components and configurations in addition to, or instead of, certain of those components and configurations discussed in conjunction with the FIG. 1A embodiment.

In accordance with embodiments of the present invention, distribution system 110 advantageously supports a distribution procedure that automatically provides various types of appropriate information for utilization by device users of corresponding user devices 122. For example, the distributed information may include, but is not limited to, coupon information and commercial advertising information that is specifically targeted towards appropriate device users of user devices 122. Unlike traditional advertising techniques that support a "pull" model that requires consumers to actively access desired advertising information, the FIG. 1A distribution system 110 supports a "push" model that automatically selects and transmits appropriate coupon information and advertising to targeted device users based upon corresponding metadata that defines the device users and the various advertisers.

In the FIG. 1A embodiment, distribution system 110 may be implemented and supported by a distribution control entity that offers distribution services to the advertisers and device users in return for financial or other compensation. The distribution control entity may be a commercial enterprise that maintains and controls key elements of distribution system 110 such as the information service 118.

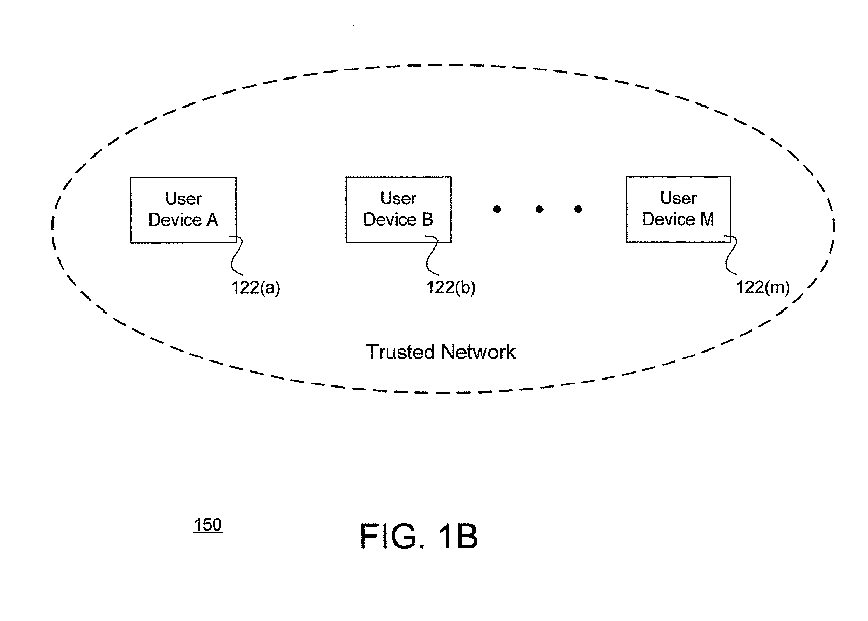

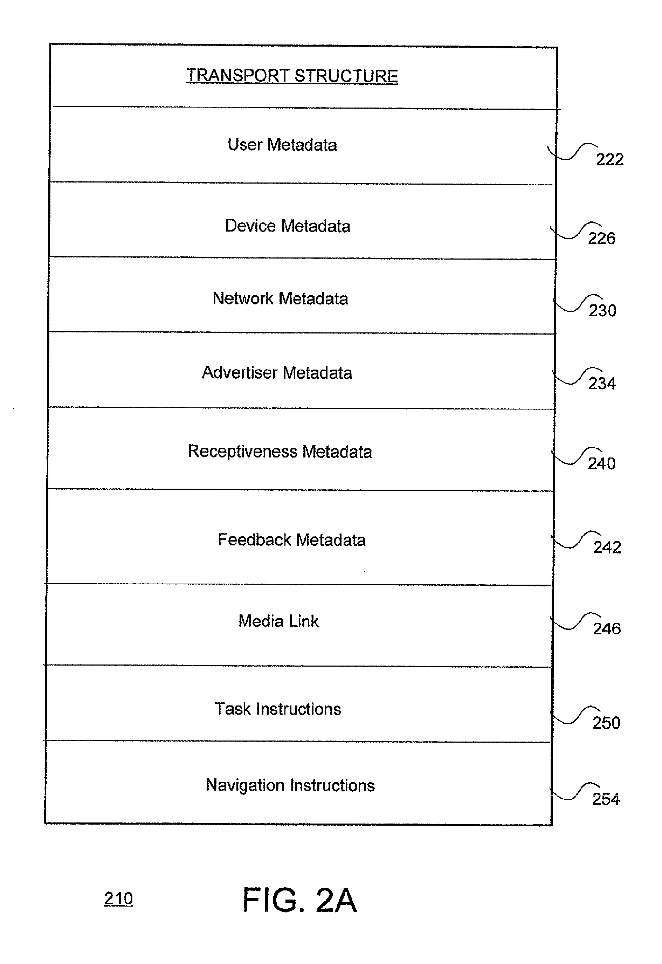

In certain embodiments, distribution system 110 may advantageously support and utilize one or more transport structures (see FIG. 2A) that automatically transport various types of relevant information to and from appropriate entities in distribution system 110. For example, the transport structures may be utilized to gather and transfer metadata regarding the various device users, the user devices 122, the network 126, and respective advertisers from information service 118. In addition, the transport structures may also be utilized to transport or provide links to targeted coupons, advertisements and/or electronic content for appropriate user devices 122. Embodiments of the present invention thus prove an improved system and method for performing a coupon information distribution procedure. Further details regarding the distribution of coupon information in the FIG. 1A distribution system 110 are discussed below in conjunction with FIGS. 1B-8C.

Referring now to FIG. 1B, a block diagram of a trusted network 150 is shown, in accordance with one embodiment of the present invention. In the FIG. 1B embodiment, trusted network 150 may include, but is not limited to, one or more user devices122(a) through 122(m). In FIG. 1B, the user devices 122 may be the same or similar to correspondingly-numbered user devices 122(a) through 122(m) from FIG. 1A. In the FIG. 1B embodiments the various user devices 122 may each perform bi-directional communications with any or all of the other user devices 122 in trusted network 150 by using any effective communication techniques. For example, the user devices 122 may communicate by utilizing peer-to-peer techniques or personal area network (PAN) technology.

The FIG. 1B trusted network 150 is presented for purposes of illustration, and in alternate embodiments, trusted network 150 may be implemented by utilizing components and configurations in addition to, or instead of, certain of those components and configurations discussed in conjunction with the FIG. 1B embodiment. For example, any desired number or type of user devices 122 may be utilized by corresponding device users to form trusted network 150. In the FIG. 1B embodiment, trusted network 150 may be defined or created by utilizing any effective techniques.

In the FIG. 1B embodiment, certain of the user devices 122 may be implemented as electronic transaction cards (such as known or enhanced SmartCards) that electronically communicate with other user devices 122 to receive and store electronic coupon information. In addition, certain of the user devices 122 may be implemented as electronic transaction token (such as known or enhanced SmartTokens) that electronically communicate with other user devices 122 to receive and store electronic coupon information. These transaction cards or transaction tokens may then communicate with user devices 122 of merchants or other sales entities for redeeming the electronic coupons.

In the FIG. 1B embodiment, certain of the user devices 122 may be implemented as digital signs or other types of intelligent local display devices. In certain embodiments, a given user device 122 may utilize an automatic communication procedure to transparently provide receptiveness metadata to one or more nearby digital signs. The digital signs may then automatically identify and display targeted and relevant advertisements and coupon information to the corresponding device user based upon the received receptiveness metadata.

Embodiments of the present invention combine a secure digital wallet with metadata-rich, transport structures that communicate with multiple electronic network devices. This distribution architecture provides significant value for the consumer, advertiser, merchandiser alike. The transport structures may be utilized to track user preferences, past behavior (including purchases), and location-based data. A fully-deployed system envisions dynamic, trusted exchanges between user devices, SmartCards (or SmartTokens), and merchant CRM systems that would allow couponing to be used, not only for traditional merchants such as supermarkets, but for higher-value transactions such as cataloging preferences for a new car purchase.

In a certain basic systems, coupon information may be delivered electronically to edge devices such as cell phones, laptops, or to digital televisions via data contained in a commercial's ATSC ancillary data space. The coupon information may be stored in a secure format on a thin electronic card that is approximately the size of a commercial credit card. The electronic coupons may be redeemed by presentation to a point-of-sale terminal network. However, in a more evolved system, the edge devices may be implemented as intelligent, two-way participants in a complex ecosystem that links consumer, advertiser, program and application producer, and other devices so that the metadata describing the totality of a consumer's behavior, preferences, and commerce mediates the applications (programs, advertisements and coupons) that are delivered.

In certain applications, embodiments of the present invention could allow a user's cellular telephone to inform her television set that she was currently watching that she had recently purchased an expensive Movado watch. Instead of providing an advertisement and coupon for a discount store, the device user could be targeted to receive an advertisement and call-to-action coupon information for a purchase at a more expensive store. In certain embodiments, the electronic coupons could have a particular activation time or deactivation time that could significantly impact customer flow to retail patterns.

In another use case, a consumer with a user device 122 that is registered with distribution network 110 (FIG. 1A) might walk into a store, and specific digital signage displays or transmission of a specific list of 'what's on sale now' aimed at the individual consumer could be automatically triggered and displayed. The acceptance and redemption of these electronic coupons would add significant value to each point in the transaction chain, and various interested parties could mine the metadata-rich transport structures for insight as to viewing and shopping habits.

Referring now to FIG. 2A, a block diagram for one embodiment of a transport structure 210 is shown. The FIG. 2A embodiment is presented for purposes of illustration, and in alternate embodiments, transport structures 210 may be implemented by utilizing components and configurations in addition to, or instead of, certain of those components and configurations discussed in conjunction with the FIG. 2A embodiment.

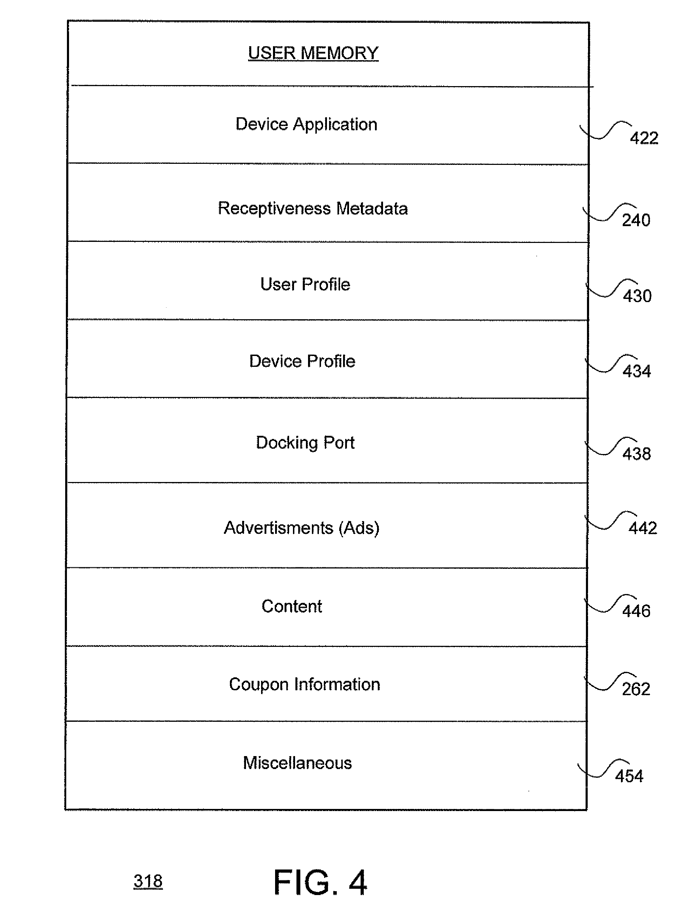

In the FIG. 2A embodiment, each of the metadata categories/fields includes information from respective corresponding metadata-source types. For example, user metadata 222 may include information regarding one or more device users of user devices 122 (FIG. 1A). In certain embodiments, user metadata 222 may be selectively compiled from one or more appropriate user profiles 430 (FIG. 4). Similarly, device metadata 226 may include information regarding one or more user devices 122. In certain embodiments, device metadata 226 may be selectively compiled from one or more appropriate device profiles 434 (FIG. 4). In the FIG. 2A embodiment, network metadata 230 may include information regarding various attributes or entities of electronic network 126 (FIG. 1A).

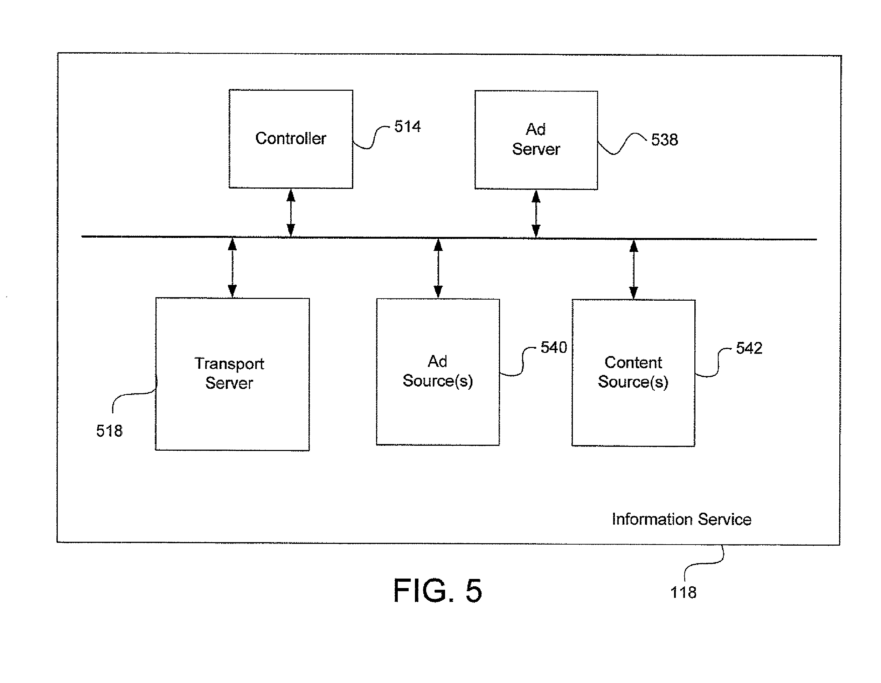

In the FIG. 2A embodiment, advertiser metadata 234 may include information regarding one or more advertisers that are associated with distribution system 110. In certain embodiments, the advertisers may be associated with ad sources 540 (FIG. 5). In the FIG. 2A embodiment, receptiveness metadata 240 may include any appropriate type of information that describes the degree of receptivity that respective device users might exhibit towards various types of advertising or coupons.

In the FIG. 2A embodiment, feedback metadata 242 may include any appropriate information or statistics that relates to the utilization or selection of corresponding advertisements or coupons by respective device users. In certain embodiments, feedback metadata 242 may be collected from corresponding user devices 122 and provided via transport structure 210 to appropriate entities. For example, certain advertisers may access the feedback metadata 242 for evaluating the efficiency characteristics of corresponding advertisements or coupons.

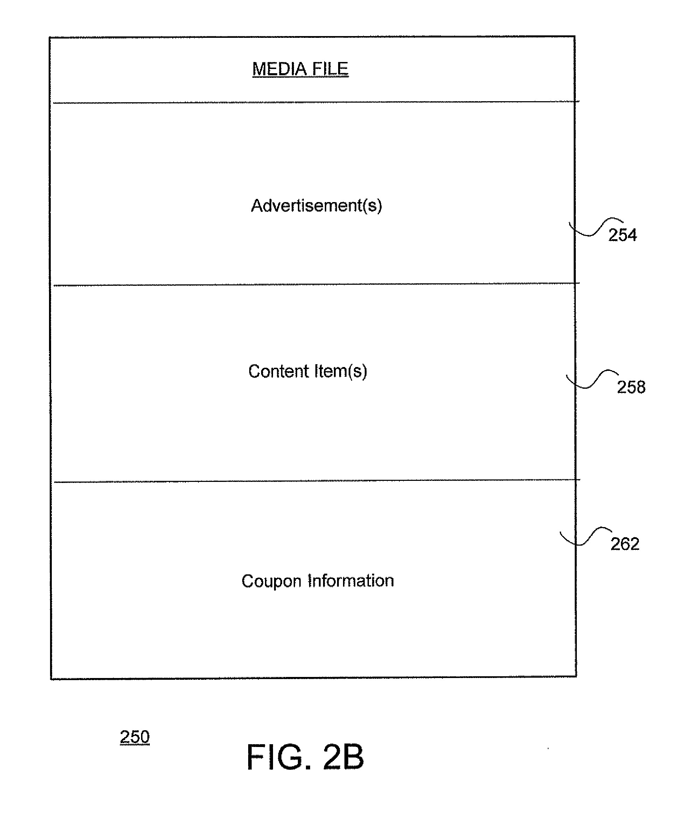

In the FIG. 2A embodiment, media link 246 may include appropriate information to indicate a location or a connection means for accessing one or more media files, as discussed below in conjunction with FIG. 2B. In the FIG. 2A embodiment, task instructions 250 may include any appropriate instructions or other information that indicate specific tasks, operations, functions, or steps for performance by transport structure 210. For example, in certain embodiments, task instructions 250 may include detailed instructions describing the type of information that transport structure 210 is directed to collect and/or distribute. In the FIG. 2A embodiment, navigation instructions 254 may include any appropriate instructions or other information that provide specific navigational directions or limitations for transport structure 210. For example, in certain embodiments, navigation instructions 216 may define at least one navigation path that is defined by one or more origin points and one or more destination points.

Various entities in distribution system 110 may utilize the information in transport structure 210 in any appropriate manner. For example, a coupon targeting procedure may be performed by matching compatible elements of user metadata 222, device metadata 226, and advertiser metadata 234 to thereby generate receptiveness metadata 240 and/or to identify appropriate types of relevant coupon information for automatic transmission to targeted device users.

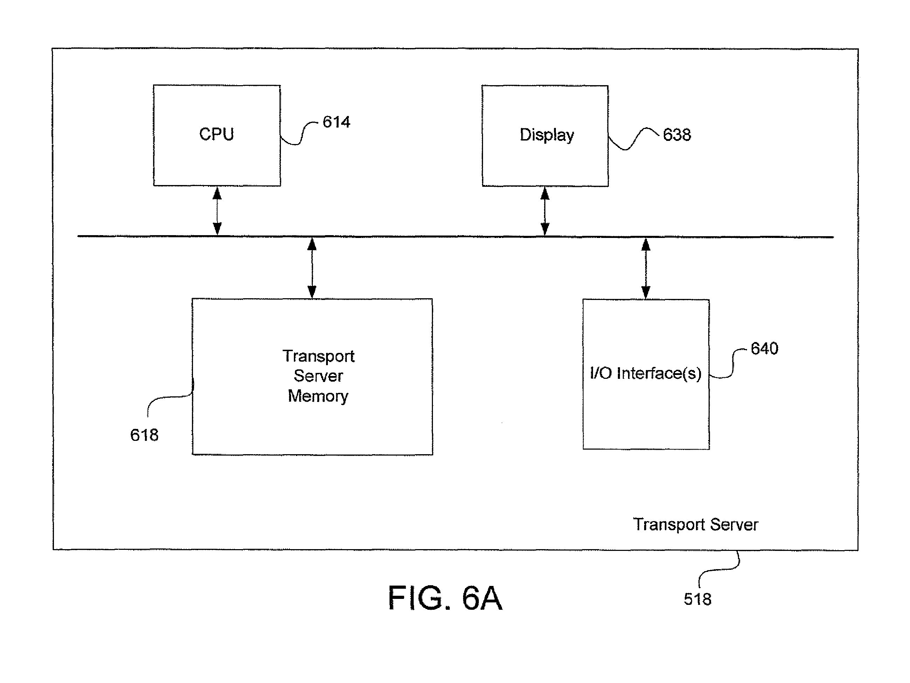

Transport structures 210 may be originated in any effective manner from any appropriate source. For example, transport structures 210 may be embedded in user devices 122 (FIG. 1A), and activated by device users if desired. Alternately, various entities in network 126 or information service 118 may create or activate transport structures 210. For example, a transport server (see FIG. 6A) may manage the origination and operation of transport structures 210. Further details regarding the implementation and utilization of the FIG. 2A transport structure 210 are discussed below in conjunction with FIGS. 2B-8C.

Referring now to FIG. 2B, a block diagram for one embodiment of a media file 250 is shown. The FIG. 2B embodiment is presented for purposes of illustration, and in alternate embodiments, media file 250 may be implemented by utilizing components and configurations in addition to, or instead of, certain of those components and configurations discussed in conjunction with the FIG. 2B embodiment. For example, the FIG. 2B media file 250 is shown as a separate entity that is accessible by utilizing the media link 246 of FIG. 2A. However, in alternate embodiments, media file 250 may be implemented as an integral part of transport structure 210 of FIG. 2A.

In the FIG. 2B embodiment, advertisements (ads) 254 may include any appropriate type of targeted advertising information that has been selected for transmission to appropriate ones of the user devices 122 (FIG. 1A). Similarly, content items 258 may include any appropriate type of electronic content information that has been selected for transmission to appropriate ones of the user devices 122. For example, content 258 may include, but is not limited to, video data, audio data, graphics, text, movies, music recordings, and computer programs.

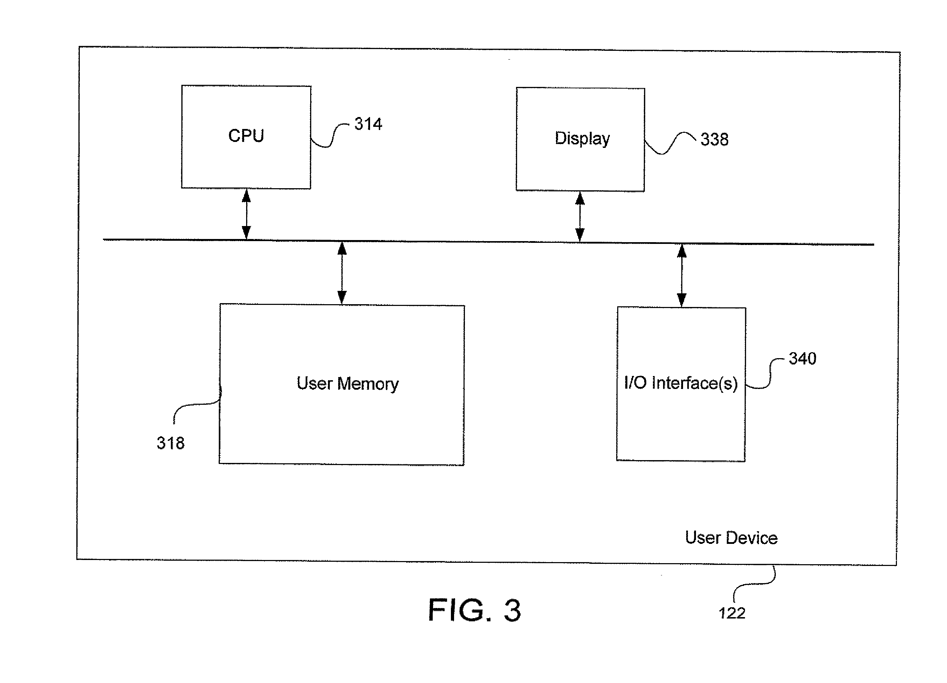

In the FIG. 2B embodiment, coupon information 262 may include any appropriate type of information or data. For example, coupon information 262 may include, but is not limited to, digitally-encoded discount privileges or rights for purchasing or otherwise acquiring any type of goods or services. In certain embodiments, coupon information may also include messages, video information, or audio information. In addition, in certain embodiments, given coupons from coupon information 262 may include coupon activation-time parameters that indicate when corresponding coupons become valid for use. Similarly, coupons from coupon information 262 may also include coupon deactivation-time parameters that indicate when corresponding coupons become invalid. Further information for providing appropriate media files 250 to targeted device users is further discussed below in conjunction with FIGS. 3-8C.

Referring now to FIG. 3, a block diagram for one embodiment of a FIG. 1A user device 122 is shown. In the FIG. 3 embodiment, user device 122 includes, but is not limited to, a central processing unit (CPU) 314, a memory 318, a display 338, and one or more input/output interface(s) (I/O interface(s)) 340. The FIG. 3 embodiment is presented for purposes of illustration, and in alternate embodiments, a user device 122 may be implemented using components and configurations in addition to, or instead of, certain of those components and configurations discussed in conjunction with the FIG. 3 embodiment. In addition, user device 122 may be implemented as any type of portable or non-portable electronic device, including, but not limited to, a desktop computer, a personal digital assistant, a cellular telephone, an electronic transaction card, a digital sign device, a settop box, or a laptop computer.

In the FIG. 3 embodiment, CPU 314 may be implemented to include any appropriate and compatible microprocessor device that preferably executes software instructions to thereby control and manage the operation of user device 122. The FIG. 3 display 338 may include any effective type of display technology including a cathode-ray-tube monitor or a liquid-crystal display device with an appropriate screen for displaying various information to a device user. In the FIG. 3 embodiment, I/O interface(s) 340 may include one or more input and/or output interfaces to receive and/or transmit any required types of information by user device 122. In the FIG. 3 embodiment, memory 318 may be implemented to include any combination of desired storage devices, including, but not limited to, read-only memory (ROM), random-access memory (RAM), and various types of non-volatile memory, such as floppy disks, memory sticks, compact disks, or hard disks. Additional details for the utilization of user device 122 are further discussed below in conjunction with FIGS. 4-8C.

Referring now to FIG. 4, a block diagram for one embodiment of the FIG. 3 user memory 318 is shown. In alternate embodiments, user memories 318 may be implemented by utilizing components and configurations in addition to, or instead of, certain of those components and configurations discussed in conjunction with the FIG. 4 embodiment.

In the FIG. 4 embodiment, device application 422 may include program instructions that are preferably executed by CPU 314 to perform various functions and operations for user device 122. The particular nature and functionality of device application 422 typically varies depending upon factors such as the specific type and particular functionality of the corresponding user device 122.

In the FIG. 4 embodiment, user device 122 utilizes device application 422 to manage receptiveness metadata 240, a user profile 430, and a device profile 434 that collectively describe any desired attributes or characteristics related to user device 122 or a device user of user device 122. For example, user profile 430 may include, but is not limited to, information regarding a device user's name, gender, age, religion, hobbies, interests, occupation, marital status, residence, income, Internet browsing history, geographic location, and credit-card transaction records. Similarly, device profile 434 may include, but is not limited to, a device type, a device manufacturer, supported device functionalities, a current device location, and a device configuration.

In addition, in the FIG. 4 embodiment, receptiveness metadata 240 may include any appropriate type of information that describes the degree of receptivity that respective device users might exhibit towards various specific types of advertising or coupons, In certain embodiments, receptiveness metadata 240 may include information that is expressly provided by a device user to either ban or accept specific types of advertisements or coupons. For example, a device user may specifically indicate that only advertising/coupons related to given product categories are to be provided.

In the FIG. 4 embodiment, docking port 438 may include any appropriate type of interface means to facilitate bi-directional communications between one or more transport structures 210 (FIG. 2) and a user device 122. In the FIG. 4 embodiment, advertisements (ads) 442 may include targeted advertising information that has been received via distribution system 110 (FIG. 1A) specifically for a device user of user device 122. Similarly, content 446 may include targeted electronic content information that has been received via distribution system 110 (FIG. 1A) specifically for a device user of user device 122.

In the FIG. 4 embodiment, coupon information 262 may include may include any appropriate type of information or data. For example, coupon information 262 may include, but is not limited to, digitally-encoded discount privileges or rights for purchasing or otherwise acquiring any type of goods or services at a preferential cost. In certain embodiments, coupon information may also include messages, video information, or audio information related to a particular product or service. In addition, in certain embodiments, coupons from coupon information 262 may include coupon activation-time parameters that indicate when corresponding coupons become valid for use. Similarly, coupons from coupon information 262 may also include coupon deactivation-time parameters that indicate when corresponding coupons become invalid.

In the FIG. 4 embodiment, miscellaneous information 454 may include any appropriate additional information or data for utilization by user device 122. For example, in certain embodiments, miscellaneous information 454 may include various types of metadata relating to other entities in distribution system 110 that was downloaded from one or more transport structures 210. Further details regarding the implementation and utilization of the FIG. 4 user memory 318 are discussed below in conjunction with FIGS. 5-8C.

Referring now to FIG. 5, a block diagram for one embodiment of the FIG. 1A information service 118 is shown. In the FIG. 5 embodiment, information service 118 includes, but is not limited to, a controller 514, a transport server 518, an ad server 538, one or more ad sources 540, and one or more content sources 542. The FIG. 5 embodiment is presented for purposes of illustration, and in alternate embodiments, information service 118 may be implemented using components and configurations in addition to, or instead of, certain of those components and configurations discussed in conjunction with the FIG. 5 embodiment.

In the FIG. 5 embodiment, controller 514 may be implemented to include any effective control means for coordinating operating functionalities of information service 118. For example, in certain embodiments, controller 514 may be implemented as a computer device with a corresponding control application program that manages the operation of information service 118. Alternately, controller 514 may be implemented as a central processing unit that includes any appropriate and compatible microprocessor device for executing software instructions to thereby control and manage the operation of information service 118.

In the FIG. 5 embodiment, transport server 518 may include any effective means for communicating with and controlling one or more transport structures 210 (FIG. 2A). Additional details regarding the implementation and utilization of transport server 518 are further discussed below in conjunction with FIG. 6A. In the FIG. 5 embodiment, ad source(s) 540 may include one or more appropriate entities for providing advertisement information and coupon information for dissemination through distribution system 110 (FIG. 1A). For example, ad sources 540 may include various commercial enterprises, specific advertisers, or advertising developers.

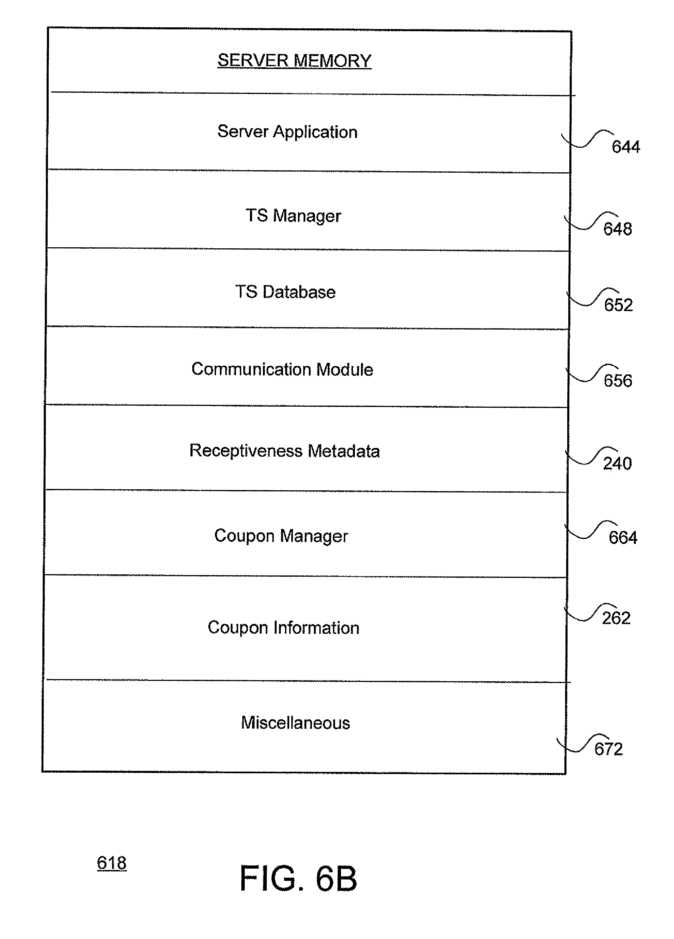

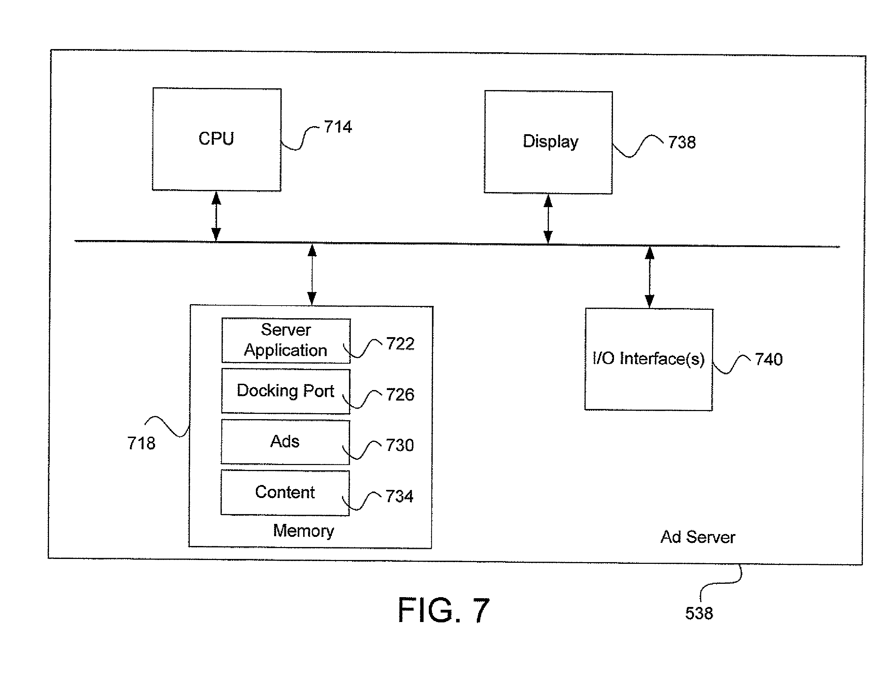

In the FIG. 5 embodiment, content source(s) 542 may include one or more appropriate entities for providing electronic content for dissemination through distribution system 110. For example, content sources 542 may include various commercial enterprises, specific advertisers, or content producers. In the FIG. 5 embodiment, ad server 538 may include any effective means for identifying and aggregating appropriate advertising information and/or electronic content for providing to targeted device users of user devices 122 (FIG. 1A) by utilizing metadata from one or more transport structures 210 (FIG. 2A). One embodiment of ad server 538 is further discussed below in conjunction with FIG. 7. Additional details for the implementation and utilization of information service 118 are further discussed below in conjunction with FIGS. 6-8C.

Referring now to FIG. 6A, a block diagram for one embodiment of the transport server 518 of FIG. 5 is shown. In the FIG. 6A embodiment, transport server 518 includes, but is not limited to, a central processing unit (CPU) 614, a memory 618, a display 638, and one or more input/output interface(s) (I/O interface(s)) 640. The FIG. 6A embodiment is presented for purposes of illustration, and in alternate embodiments, transport servers 518 may be implemented using components and configurations in addition to, or instead of, certain of those components and configurations discussed in conjunction with the FIG. 6A embodiment.

In the FIG. 6A embodiment, CPU 614 may be implemented to include any appropriate and compatible microprocessor device that preferably executes software instructions to thereby control and manage the operation of transport server 518. The FIG. 6A display 638 may include any effective type of display technology including a cathode-ray-tube monitor or a liquid-crystal display device with an appropriate screen for displaying various information to a device user. In the FIG. 6A embodiment, I/O interface(s) 640 may include one or more input and/or output interfaces to receive and/or transmit any required types of information by user device 122. In the FIG. 6A embodiment, transport server memory 618 may be implemented to include any combination of desired storage devices, including, but not limited to, read-only memory (ROM), random-access memory (RAM), and various types of non-volatile memory, such as floppy disks, memory sticks, compact disks, or hard disks.

Referring now to FIG. 6B, a block diagram for one embodiment of the FIG. 6A transport server memory 618 is shown. In alternate embodiments, transport server memories 618 may be implemented by utilizing components and configurations in addition to, or instead of, certain of those components and configurations discussed in conjunction with the FIG. 6B embodiment.

In the FIG. 6B embodiment, transport server memory 618 may include, but is not limited to, a number of software programs and data that are disclosed below. For example, transport server memory 618 may include a server application 644 of program instructions that are preferably executed by CPU 614 to perform various functions and operations for transport server 518. The particular nature and functionality of server application typically varies depending upon factors such as the specific type and particular functionality of the corresponding transport server 518.

The transport server 518 may utilize a TS manager 648 to manage and coordinate various functions for one or more transport structures 210 (FIG. 2A). In certain embodiments, the TS manager 648 may include a registration module for coordinating registration procedures to register device users of user devices 122 for participating in various authorized distribution services from distribution system 110 (FIG. 1A). A TS database 652 may include any appropriate information regarding the transport structures 210 that provide distribution services to various entities in distribution system 110.

In certain embodiments, the TS manager 648 may continually update respective transport structure information in the TS database 652 to reflect the current status of transport structures 210 in distribution system 110. The transport server 518 may utilize a communication module 656 to perform bi-directional electronic communication procedures with any appropriate remote entity. For example, the communication module 656 may be utilized to remotely communicate with transport structures 210 in distribution system 110.

In the FIG. 6B embodiment, server application 644 or other appropriate entity may analyze various types of metadata from transport structures 210 to generate corresponding receptiveness metadata 240 for individual device users and their associated user devices 122. Receptiveness metadata 240 may include any appropriate type of information that describes the degree of receptivity that respective device users are likely to exhibit towards various specific types of advertising or coupon information. In certain embodiments, receptiveness metadata 240 may include information that is expressly provided by a device user to either ban or accept specific types of advertisements or coupon information.

In the FIG. 6B embodiment, a coupon manager 664 may perform a metadata analysis procedure by utilizing any effective techniques to produce corresponding targeted and relevant coupon information 262 to be sent to one or more appropriate device users. For example, in certain embodiments, coupon manager 664 may analyze metadata gathered from a given user device 122 and corresponding device user in light of certain predefined criteria to identify specific relevant coupon information 262.

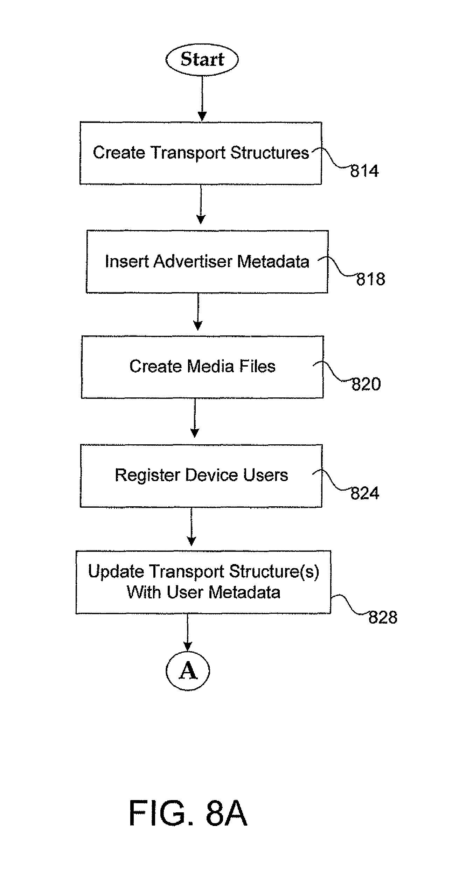

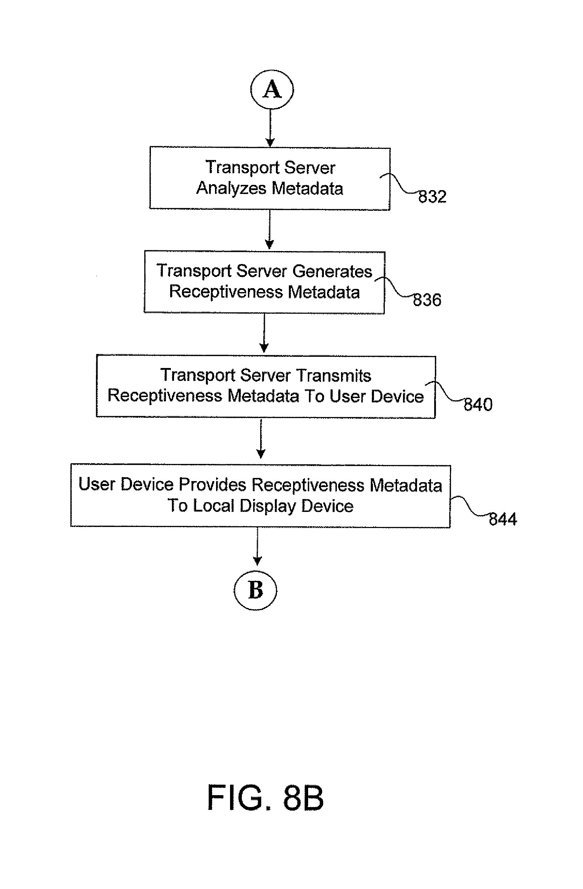

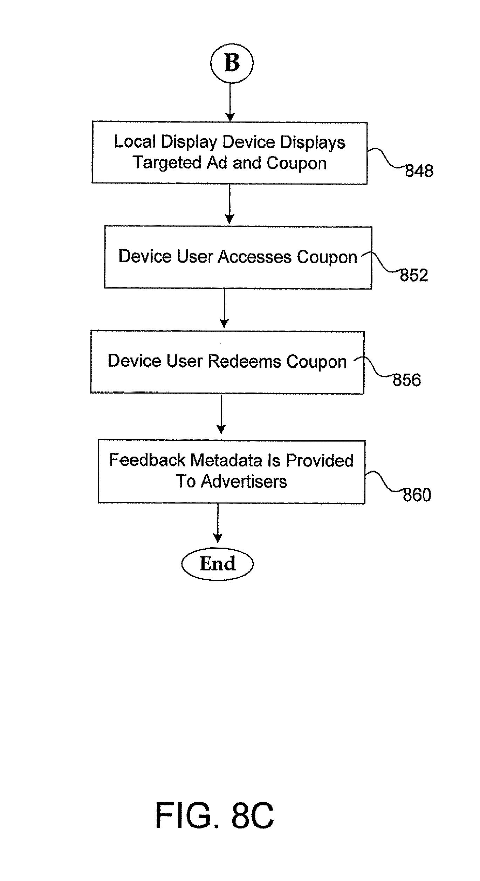

In the FIG. 6B embodiment, coupon information 262 may include any appropriate type of information or data. For example, coupon information 262 may include, but is not limited to, digitally-encoded discount privileges or rights for purchasing or otherwise acquiring any type of goods or services at a preferential cost. In certain embodiments, coupon information may also include messages, video information, or audio information related to a particular product or service. In addition, in certain embodiments, coupons from coupon information 262 may include coupon activation-time parameters that indicate when corresponding coupons become valid for use. Similarly, coupons from coupon information 262 may also include coupon deactivation-time parameters that indicate when corresponding coupons become invalid. In the FIG. 6B embodiment, miscellaneous information 672 may include any desired type of information or data for utilization by transport server 518. The utilization of transport server 518 is further discussed below in conjunction with FIG. 8.

Referring now to FIG. 7, a block diagram for one embodiment of the ad server 538 of FIG. 5 is shown. In the FIG. 7 embodiment, ad server 538 includes, but is not limited to, a central processing unit (CPU) 714, a memory 718, a display 738, and one or more input/output interface(s) (I/O interface(s)) 740. The FIG. 7 embodiment is presented for purposes of illustration, and in alternate embodiments, ad server 538 may be implemented using components and configurations in addition to, or instead of, certain of those components and configurations discussed in conjunction with the FIG. 7 embodiment.

In the FIG. 7 embodiment, CPU 714 may be implemented to include any appropriate and compatible microprocessor device that preferably executes software instructions to thereby control and manage the operation of ad server 538. The FIG. 7 display 738 may include any effective type of display technology including a cathode-ray-tube monitor or a liquid-crystal display device with an appropriate screen for displaying various information to a device user. In the FIG. 7 embodiment, I/O interface(s) 740 may include one or more input and/or output interfaces to receive and/or transmit any required types of information by ad server 538.

In the FIG. 7 embodiment, memory 718 may be implemented to include any combination of desired storage devices, including, but not limited to, read-only memory (ROM), random-access memory (RAM), and various types of non-volatile memory, such as floppy disks, memory sticks, compact disks, or hard disks. In the FIG. 7 embodiment, memory 718 includes, but is not limited to, a server application 722, a docking port 726, ads 730, and content 734.

In the FIG. 7 embodiment, server application 722 may include program instructions that are preferably executed by CPU 714 to perform various functions and operations for ad server 538. The particular nature and functionality of server application 722 typically varies depending upon factors such as the specific type and particular functionality of the corresponding ad server 538. In certain embodiments, server application 722 may analyze information or instructions from transport server 518 or transport structures 210 to match appropriate media files 250 (FIG. 2B) with targeted device users of user devices 122 (FIG. 3).

In the FIG. 7 embodiment, docking port 726 may include any effective interface means for ad server 538 to bi-directionally communicate with one or more transport structures 210 (FIG. 2) to transfer ads 730, content 734, or any other types of information. In the FIG. 7 embodiment, ads 730 include advertising or coupon information that is provided to ad server 538 from any appropriate entities, such as ad sources 540 (FIG. 5). Similarly, in the FIG. 7 embodiment, content 734 includes electronic content that is provided to ad server 538 from any appropriate entities, such as content sources 542 (FIG. 5).

Referring now to FIGS. 8A-8C, a flowchart of method steps for performing a coupon distribution procedure is shown, in accordance with one embodiment of the present invention. The FIG. 8 flowchart is presented for purposes of illustration, and in alternate embodiments, the present invention may utilize steps and sequences other than those steps and sequences discussed in conjunction with the FIG. 8 embodiment.

In step 814 of FIG. 8A, one or more transport structures 210 (FIG. 2A) are initially created in any effective manner. For example, transport structures 210 may be embedded in user devices 122 during manufacture, and then activated by device users. Alternately, an appropriate entity (such as a transport server 518) in a distribution system 110 may create or otherwise provide the initial transport structures 210. In step 818, advertiser metadata 234 from one or more advertisers 814 may be added to the transport structures 210 in any desired manner to represent relevant characteristics and advertising goals of the corresponding advertisers 814.

In step 820, appropriate media files 250 may be created to include information for dissemination to targeted device users through distribution system 110. The media files 250 may include any desired information, such as advertisements 254, content items 258, and coupon information 262. In step 824, device users performs a registration procedure to receive information from the distribution system 110. During the registration procedure, the device users typically provides relevant information including, but not limited to, user metadata 222 and device metadata 226. In step 828, the transport structures 210 are updated to include the metadata provided by the device users during the foregoing registration procedure. The FIG. 8A process then advances to step 832 of FIG. 8B through connecting letter "A."

In step 832, a transport server 518 or other appropriate entity analyzes the metadata provided by the transport structure(s) 210. Then, in step 836, the transport server 518 responsively generates appropriate receptiveness metadata 240 based upon the foregoing metadata analysis procedure. Receptiveness metadata 240 may include any appropriate type of information that describes the degree of receptivity that respective device users are likely to exhibit towards various specific types of advertising or coupon information. In certain embodiments, receptiveness metadata 240 may include information that is expressly provided by a device user to either ban or accept specific types of advertisements or coupon information.

In step 840, transport server 518 transmits the receptiveness metadata 240 to appropriate device users by utilizing any effective means. For example, in certain embodiments, one or more transport structures 210 may be utilized to convey receptiveness metadata 240 to respective user devices 122. In step 844 of the FIG. 8B embodiment, a given user device 122 may automatically provide appropriate receptiveness metadata 240 to a local display device, such as an intelligent digital sign device, by utilizing any effective communication techniques. For example, various effective wireless communication techniques may be utilized to permit the user device 122 to automatically detect the presence and communicate with a nearby digital sign device that is within line-of-sight of the device user of the particular user device 122. The FIG. 8B process then advances to step 848 of FIG. 8C through connecting letter "B."

In step 848, the local display device automatically analyzes the receptiveness metadata 240 received from the user device 122, and responsively identifies and displays appropriate targeted advertisements and/or electronic coupon information 262 for viewing by the device user. In step 852, the device user may then advantageously utilize the corresponding user device 122 to access desired coupons 262 by utilizing any appropriate means. For example, in certain embodiments, the coupon(s) 262 may be downloaded onto the user device 122 or to an electronic transaction card/token.

In step 856, the device user may later redeem the coupon(s) 262 in any appropriate manner by using any effective electronic techniques. Finally, in step 860, feedback metadata 242 regarding the coupon(s) 262 and the redemption transaction may be generated and provided to advertisers or other interested entities in any effective manner. For example, in certain embodiments, a user device 122 of a merchant involved in the redemption transaction may automatically generate feedback metadata 242. In addition, a user device 122 of the coupon redeemer/device user may alternately generate the feedback metadata 242.

In the FIG. 8C embodiment, the feedback metadata 242 may include any desired type of information. For example, feedback metadata 242 may include, but is not limited to, a coupon type, a coupon source, a coupon origination date, a coupon redemption date, a product or service type, and a merchant identity. In the FIG. 8C embodiment, the feedback metadata 242 may be transported to advertisers or other interested parties by utilizing one or more transport structures 210 or other effective techniques. Based upon the feedback metadata 242, advertisers may thus more accurately analyze the effectiveness and efficiency of their corresponding advertisements and marketing strategies.

The foregoing coupon distribution procedure of FIG. 8 is described in the context of targeted coupons and advertising being provided from a local smart display device or digital sign device. However, in accordance with embodiments of the present invention, appropriate coupon information may be identified and provided to device users from any effective source. For example, in certain embodiments, the coupon information may be identified and provided directly to targeted user devices 122 by transport server 518 via one or more transport structures 210. For at least the foregoing reasons, embodiments of the present invention therefore provide an improved system and method for distributing coupon information in an electronic network.

The invention has been explained above with reference to certain embodiments. Other embodiments will be apparent to those skilled in the art in light of this disclosure. For example, the present invention may readily be implemented using certain configurations and techniques other than those described in the specific embodiments above. Additionally, the present invention may effectively be used in conjunction with systems other than those described above. Therefore, these and other variations upon the discussed embodiments are intended to be covered by the present invention, which is limited only by the appended claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A system for implementing an information distribution network, comprising:
an information service that is configured to provide information distribution services through said information distribution network;
user devices that device users utilize to communicate with said information service for receiving said information distribution services;
a transport structure that communicates with network entities in said information distribution network, said transport structure collecting metadata for identifying and providing coupon information from said information service to a target user device; and
a transport server that performs a metadata analysis procedure upon said metadata to responsively generate said coupon information.

2. The system of claim 1 wherein said metadata includes user metadata about said device users, device metadata about said user devices, network metadata, geographic location metadata, and advertiser metadata.

3. The system of claim 1 wherein said coupon information includes electronic coupons for one or more products or services, ancillary message information, and one or more coupon parameters, said coupon parameters including a coupon activation parameter that specifies when said electronic coupons become valid, said coupon parameters including a coupon deactivation parameter that specifies when said electronic coupons become invalid.

4. The system of claim 1 wherein said coupon information is stored on an electronic transaction card until being electronically redeemed by one of said device users.

5. The system of claim 2 wherein said user metadata includes user preferences that are created by said device users to expressly prohibit including banned coupon categories as part of said coupon information.

6. The system of claim 1 wherein said targeted user device provides said metadata to a local digital sign device that responsively identifies and displays targeted advertisements and coupons to a device user, said metadata provided to said local digital sign device including receptiveness metadata that indicates a degree of likelihood that said device user will utilize said targeted advertisements and coupons.

7. The system of claim 1 further comprising feedback metadata regarding usage characteristics of said coupon information, said feedback metadata being provided to advertising entities for evaluating how efficiency said coupon information is being targeted and utilized.

8. The system of claim 1 wherein said transport server analyzes said metadata to produce receptiveness metadata about said device users utilizing said coupon information, said receptiveness metadata being provided to said target user device, said target user device automatically providing said receptiveness metadata to a local digital sign device, said local digital sign device analyzing said receptiveness metadata to identify and display corresponding targeted advertisements and coupons, said target user device accessing and storing said coupons in response to a selection input from a device user, said device user electronically redeeming said coupons to obtain advertised goods or services at a discounted rate.

9. The system of claim 1 wherein a merchant device generates feedback metadata regarding a redemption transaction in which said coupons are redeemed, said feedback metadata being provided to one or more advertisers.

10. An electronic device for utilizing an information distribution network, comprising:
a device application that device users utilize to communicate with an information service for receiving said information distribution services;
a transport structure that communicates with network entities in said information distribution network, said transport structure collecting metadata for allowing a transport server to perform a metadata analysis procedure upon said metadata for responsively generating coupon information from said information service to said electronic device; and
a processor configured to control said device application.

11. The electronic device of claim 10 wherein said metadata includes user metadata about said device users, device metadata about said user devices, network metadata, geographic location metadata, and advertiser metadata.

12. The electronic device of claim 10 wherein said coupon information includes electronic coupons for one or more products or services, ancillary message information, and one or more coupon parameters, said coupon parameters including a coupon activation parameter that specifies when said electronic coupons become valid, said coupon parameters including a coupon deactivation parameter that specifies when said electronic coupons become invalid.

13. The electronic device of claim 10 wherein said coupon information is stored on an electronic transaction card until being electronically redeemed by one of said device users.

14. The electronic device of claim 11 wherein said user metadata includes user preferences that are created by said device users to expressly prohibit including banned coupon categories as part of said coupon information.

15. The electronic device of claim 10 wherein said targeted user device provides said metadata to a local digital sign device that responsively identifies and displays targeted advertisements and coupons to a device user, said metadata provided to said local digital sign device including receptiveness metadata that indicates a degree of likelihood that said device user will utilize said targeted advertisements and coupons.
